# EUROPÄISCHE PATENTANMELDUNG

(11) **EP 4 549 295 A1**
(43) Veröffentlichungstag der Anmeldung: **07.05.2025**
(21) Anmeldenummer: 24193506.3
(22) Anmeldetag: 08.08.2024
(51) Int. Cl.: B62D 33/06

(54) **FAHRERKABINE FÜR EIN LANDWIRTSCHAFTLICHES ARBEITSFAHRZEUG**

(30) Priorität: 30.10.2023 DE 102023129944
(71) Anmelder: CLAAS KGaA mbH, 33428 Harsewinkel (DE)
(72) Erfinder: Quednau, Alexander, 73776 Altbach (DE); Mildt, Natalie, 73776 Altbach (DE); Grevinga, Markus, 48369 Saerbeck (DE); Bohl, Maximilian, 48231 Warendorf (DE); Wagner, Thomas, 33803 Steinhagen (DE); Groetsch, Maximilian, 48231 Warendorf (DE); Blind, Alain, 48231 Warendorf (DE)
(74) Vertreter: CLAAS Gruppe

(57) **Zusammenfassung**

Die vorliegende Erfindung betrifft eine Fahrerkabine (4) für ein landwirtschaftliches Arbeitsfahrzeug (1), wobei die Fahrerkabine (4) einen Fahrersitz (18), an dem beidseitig Armlehnen (21) angeordnet sind, eine die Fahrerkabine (4) frontseitig begrenzende Frontscheibe (9), die sich im Wesentlichen zwischen Kabinenboden (5) und Kabinendach (6) der Fahrerkabine (4) erstreckt, sowie ein Lenkerersatzsystem aufweist, wobei das Lenkerersatzsystem
- zumindest in die beidseitig am Fahrersitz (18) positionierten Armlehnen (21) integrierte Lenkelemente (38),
- zumindest eine dem Fahrersitz (18) frontseitig in einem bodennahen Bereich zugeordnete Fußstütze (28),
- zumindest ein frontseitig angeordnetes Haltegriffsystem (31), und
- zumindest eine von einem in einer Sitzposition befindlichen Fahrer vom Fahrersitz (18) aus erreichbare Verstauvorrichtung (24) umfasst.

## Beschreibung

Die vorliegende Erfindung betrifft eine Fahrerkabine für ein landwirtschaftliches Arbeitsfahrzeug gemäß dem Oberbegriff des Anspruches 1. Weiterhin ist ein landwirtschaftliches Arbeitsfahrzeug mit einer Fahrerkabine Gegenstand der vorliegenden Erfindung.

Eine Fahrerkabine für ein landwirtschaftliches Arbeitsfahrzeug der eingangs genannten Art ist aus der US 2021/0123210 A1 bekannt. Die in dieser Offenlegungsschrift beschriebene Fahrerkabine weist einen Fahrersitz, an dem beidseitig Armlehnen angeordnet sind, eine die Fahrerkabine frontseitig begrenzende Frontscheibe, die sich im Wesentlichen zwischen Kabinenboden und Kabinendach der Fahrerkabine erstreckt, sowie ein Lenkerersatzsystem auf. Das Lenkerersatzsystem umfasst einen Joystick als Bedienelement zur Generierung von Lenkbewegungen Der Joystick ist an einer der Armlehnen angeordnet. Der Joystick ist mittels eines Schlittens aus der Armlehne ausziehbar. Das in der US 2021/0123210 A1 offenbarte Arbeitsfahrzeug ist lenkerlos ausgeführt. Bei einer Ausführung des Arbeitsfahrzeugs als Mähdrescher führt die lenkerlose Ausführung dazu, dass beim Fahrer des Mähdreschers aufgrund der großen und bodentief ausgeführten Frontscheibe ein Unsicherheitsgefühl auftreten kann, da die große Frontscheibe das Gefühl vermittelt, der Fahrer könne frontseitig aus der Kabine stürzen. Zudem fehlt es aufgrund der lenkerlosen Ausgestaltung an einer Festhaltemöglichkeit, wenn der Fahrer sich nach vorne beugt, um in das Vorsatzgerät des Mähdreschers zu schauen.

Ausgehend vom vorstehend genannten Stand der Technik liegt der Erfindung die Aufgabe zugrunde, eine Fahrerkabine für ein landwirtschaftliches Arbeitsfahrzeug weiterzubilden, welche sich durch eine verbesserte, benutzerfreundlichere Ausgestaltung im Inneren der Fahrerkabine auszeichnet.

Diese Aufgabe wird erfindungsgemäß durch eine Fahrerkabine für ein landwirtschaftliches Arbeitsfahrzeug mit den Merkmalen des Anspruches 1 sowie ein landwirtschaftliches Arbeitsfahrzeug mit den Merkmalen des Anspruches 15 gelöst. Vorteilhafte Weiterbildungen sind Gegenstand der abhängigen Ansprüche.

Gemäß dem Anspruch 1 wird eine Fahrerkabine für ein landwirtschaftliches Arbeitsfahrzeug vorgeschlagen, wobei die Fahrerkabine einen Fahrersitz, an dem beidseitig Armlehnen angeordnet sind, eine die Fahrerkabine frontseitig begrenzende Frontscheibe, die sich im Wesentlichen zwischen Kabinenboden und Kabinendach der Fahrerkabine erstreckt, sowie ein Lenkerersatzsystem aufweist. Erfindungsgemäß ist vorgesehen, dass das Lenkerersatzsystem
- zumindest in die beidseitig am Fahrersitz positionierten Armlehnen integrierte Lenkelemente,
- zumindest eine dem Fahrersitz frontseitig in einem bodennahen Bereich zugeordnete Fußstütze,
- zumindest ein frontseitig angeordnetes Haltegriffsystem, und
- zumindest eine von einem in einer Sitzposition befindlichen Fahrer vom Fahrersitz aus erreichbare Verstauvorrichtung umfasst.

Wesentlich ist dabei, dass sich die erfindungsgemäß ausgeführte Fahrerkabine durch ein einfach zu bedienendes Lenkerersatzsystem auszeichnet, wobei dem Fahrer durch die Fußstütze und das Haltegriffsystem auch ohne ein Lenkrad ein sicheres Fahrgefühl vermittelt wird und das Vorfeld des Arbeitsfahrzeugs gut einsehbar ist.

Die Integration jeweils eines Lenkelementes in die beidseitig am Fahrersitz positionierten Armlehnen hat den Vorteil, dass den Lenkelementen durch eine Steuereinheit verschiedene Steuerungsaufgaben adaptiv zugeordnet werden können, die für verschiedene Arten von Arbeitsfahrzeugen, auf denen die Fahrerkabine eingesetzt wird, variieren können. Die Lenkelemente sind Teil eines Steer-by-Wire Lenksystems.

Mittels der zumindest einen dem Fahrersitz frontseitig im bodennahen Bereich zugeordnete Fußstütze wird eine Komfortverbesserung erreicht. Auch kann eine ergonomischere Sitzhaltung des Fahrers hierdurch begünstigt werden. Zudem wird dadurch dem aufgrund der großen und bodentief ausgeführten Frontscheibe auftretenden Unsicherheitsgefühl entgegengewirkt.

Das zumindest ein frontseitig vor der Frontscheibe angeordnete Haltegriffsystem ermöglicht es dem Fahrer, sich nach vorne zu beugen, um ein am Arbeitsfahrzug angeordnetes Vorsatzgerät einzusehen, ohne sich dabei an einer der A-Säulen oder der Frontscheibe selbst abstützen zu müssen.

Die zumindest eine von dem in der Sitzposition befindlichen Fahrer vom Fahrersitz aus erreichbare Verstauvorrichtung ist unter Komfort- und Sicherheitsgesichtspunkten vorteilhaft.

Insbesondere können die Lenkelemente als Joystick oder Lenkhebel ausgeführt sein. Derartige Lenkelemente ermöglichen eine intuitive Handhabung. Zudem können derart ausgeführte Lenkelemente durch eine ergonomische Formgebung auszeichnen, wodurch eine andauernde Betätigung bzw. ein andauerndes Umgreifen der Lenkelemente ermüdungsfreier möglich ist.

Weiterhin kann die jeweilige Armelehne eine Unterarmauflagefläche aufweisen, an die sich ein tieferliegender Abschnitt anschließt, auf welchem das jeweilige zumindest eine Lenkelement angeordnet ist. Die Anordnung des zumindest einen Lenkelements auf dem tieferliegender Abschnitt einer jeweiligen Armlehne ist hinsichtlich der Ergonomie bei der dauerhaften Betätigung der Lenkelemente vorteilhaft.

Insbesondere kann die Fußstütze als zumindest eine im Wesentlichen bogenförmig verlaufende Schiene ausgeführt sein, die sich abschnittsweise über die Breite der Frontscheibe erstreckt. Bevorzugt sind zwei Schienen vorgesehen, die parallel zueinander verlaufend angeordnet sind.

Dabei kann die Fußstütze im Wesentlichen L-förmig angeordnet sein, wobei sich ein Abschnitt der zumindest einen Schiene abschnittsweise und im Wesentlichen parallel zu einer Längsseite der Fahrerkabine erstreckt. Bevorzugt verläuft der Abschnitt entlang der einem Zugang zur Fahrerkabine gegenüberliegenden Längsseite.

Gemäß einer Weiterbildung kann das Haltegriffsystem als ein im Wesentlichen senkrecht zum Kabinenboden aufragendes stangenförmiges Bauteil mit einem am freien Ende angeordneten Griffelement ausgeführt sein, wobei das Griffelement im Wesentlichen zentrisch auf und/oder orthogonal zum Bauteil auf diesem angeordnet ist. Insbesondere kann das Griffelement im Wesentlichen zylinderförmig, kugelförmig oder ellipsoidförmig ausgeführt sein.

Denkbar ist, dass das Haltegriffsystem zumindest abschnittsweise in eine gegenüber dem Kabinenboden im Wesentlichen parallele Position überführbar ist. Das Haltegriffsystem kann dabei ein Gelenkelement im unteren Bereich des stangenförmigen Bauteils aufweisen, um das Haltegriffsystem zumindest abschnittsweise parallel zum Kabinenboden, d.h. liegend, zu positionieren.

Alternativ oder zusätzlich ist es denkbar, dass das Haltegriffsystem entlang der Fußstütze verschiebbar ist. Dadurch ließe sich das Haltegriffsystem in eine Position außerhalb des Sichtbereichs der Frontscheibe bewegen. Dabei kann das Haltegriffsystem auf der zumindest einen Schiene der Fußstütze an unterschiedlichen Stellen lösbar fixierbar sein. Hierzu kann das Haltegriffsystem am bodenseitigen Ende des stangenförmigen Bauteils eine Fixiervorrichtung aufweisen,

Gemäß einer Weiterbildung kann die zumindest eine Verstauvorrichtung als ein Ablagefach und/oder eine Halterung und/oder ein verschließbarer Stauraum ausgeführt sein. So kann die Anordnung eines Ablagefachs seitlich neben dem Fahrersitz vorgesehen sein, wobei der Abstand des Ablagefachs derart gewählt ist, dass der auf dem Fahrersitz sitzende Fahrer durch Schwenken des Fahrersitzes in dessen Griffweite gelangen kann.

Insbesondere kann der Stauraum eine, insbesondere um eine Schwenkachse schwenkbare, Abdeckung aufweisen, welche durch einen Verschlussmechanismus entriegelbar und verschließbar ist.

Des Weiteren kann der Stauraum mit einer Benutzererkennungsvorrichtung ausgeführt sein, die dazu eingerichtet ist, den Verschlussmechanismus zu entriegeln. Bevorzugt kann die Benutzererkennungsvorrichtung als Fingerabdrucksensor ausgeführt sein. Dies ermöglicht eine Personalisierung des Zugangs zum Stauraum. Der Fingerabdrucksensor kann in ein Displayelement integriert sein, welches am Stauraum oder an der diesen verschließenden Abdeckung angeordnet ist.

Eine Weiterbildung sieht vor, dass im frontseitigen Bereich der Fahrerkabine ein teleskopierbar ausgeführtes Lenkrad angeordnet sein kann. Das teleskopierbare Lenkrad ist insbesondere für die Straßenfahrt vorgesehen. Das teleskopierbare Lenkrad ist Teil des Steer-by-Wire Lenksystems.

Dabei kann das teleskopierbare Lenkrad in einer Haltevorrichtung aufgenommen sein, welche entlang der Fußstütze verfahrbar ist oder auf dem Kabinenboden angeordnet ist. Hierbei kann das teleskopierbare Lenkrad entlang der Fußstütze aus dem Bereich der Frontscheibe bewegt werden, wodurch der Fahrer eine unterbrechungsfreiere Sicht in Vorwärtsfahrtrichtung erhält.

Gemäß einer Weiterbildung kann der Fahrersitz um eine vertikale Achse schwenkbar sein, wobei eine den Fahrersitz drehende Aktuatorik vorgesehen ist, welche von einer Steuerungsvorrichtung ansteuerbar ist, um den Fahrersitz bei Detektion eines Betretens oder Verlassens der Fahrerkabine automatisch aus einer Straßenfahrposition, in welcher der Fahrersitz mit seiner Sitzflächenvorderkante im Wesentlichen parallel zur Frontscheibe orientiert ist, in eine einem Zugangsbereich der Fahrerkabine zugewandte Position zu verschwenken. Die Aktuatorik ist vorzugsweise als Elektromotor ausgeführt. Die Steuerungsvorrichtung kann dazu eingerichtet sein, das Aufschließen oder das Öffnen einer Zugangstür zur Fahrerkabine als das Betreten durch den Fahrer zu detektieren.

Nach einer weiteren Lehre gemäß Anspruch 15, der eigenständige Bedeutung zukommt, wird ein landwirtschaftliches Arbeitsfahrzeug mit einer Fahrerkabine beansprucht, wobei die Fahrerkabine nach einem der Ansprüche 1 bis 14 ausgeführt ist. Auf alle Ausführungen zu der erfindungsgemäßen Fahrerkabine darf verwiesen werden.

Die vorliegende Erfindung wird nachstehend anhand eines in den Zeichnungen dargestellten Ausführungsbeispieles näher erläutert.

Es zeigen:
- Fig. 1: schematisch und exemplarisch ein als Erntemaschine ausgeführtes landwirtschaftliches Arbeitsfahrzeug;
- Fig. 2: schematisch und exemplarisch eine perspektivische Ansicht eines Kabinenrahmens einer Fahrerkabine des landwirtschaftlichen Arbeitsfahrzeugs;
- Fig. 3: schematisch und exemplarisch eine perspektivische Teilansicht einer Fahrerkabine von vorne;
- Fig. 4: schematisch und exemplarisch eine perspektivische Teilansicht der Fahrerkabine gemäß Fig. 3 von hinten;
- Fig. 5: schematisch und exemplarisch eine Seitenansicht eines Fahrersitzes;
- Fig. 6A: schematisch und exemplarisch eine perspektivische Ansicht einer Haltevorrichtung für ein teleskopierbar ausgeführtes Lenkrad in einer Verstauposition; und
- Fig. 6B: schematisch und exemplarisch eine perspektivische Ansicht des Lenkrades gemäß Fig. 6A in einer Betriebsposition.

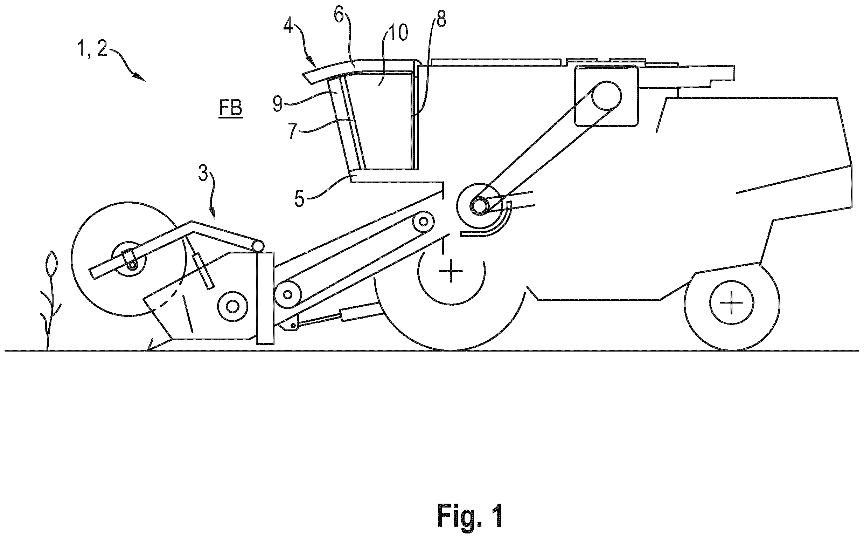

In Fig. 1 ist schematisch und exemplarisch ein als Erntemaschine 2 ausgeführtes landwirtschaftliches Arbeitsfahrzeug 1 dargestellt. Bei der Erntemaschine 2 kann es sich um einen Mähdrescher oder Feldhäcksler handeln. Das landwirtschaftliche Arbeitsfahrzeug 1 kann auch als Traktor ausgeführt sein. Die Erntemaschine 2 umfasst ein Vorsatzgerät 3 als Anbaugerät, welches im Frontbereich FB unterhalb einer Fahrerkabine 4 angeordnet ist. Die Fahrerkabine 4 umfasst einen Kabinenrahmen 11 mit einer Rahmenstruktur 12, welche zwei in deren Frontbereich FB vorgesehene A-Säulen 7 sowie zwei zu diesen beabstandet angeordnete B-Säulen 8 aufweist. Die Fahrerkabine 4 weist eine sich zwischen den A-Säulen 7 erstreckende Frontscheibe 9 auf, die sich im Wesentlichen zwischen Kabinenboden 5 und Kabinendach 6 der Fahrerkabine 4 erstreckt. Zwischen einem Paar der A-Säulen 7 und der B-Säulen 8 befindet sich ein Zugangsbereich 10, der durch eine Tür mit bodentiefer transparenter Seitenscheibe begrenzt ist.

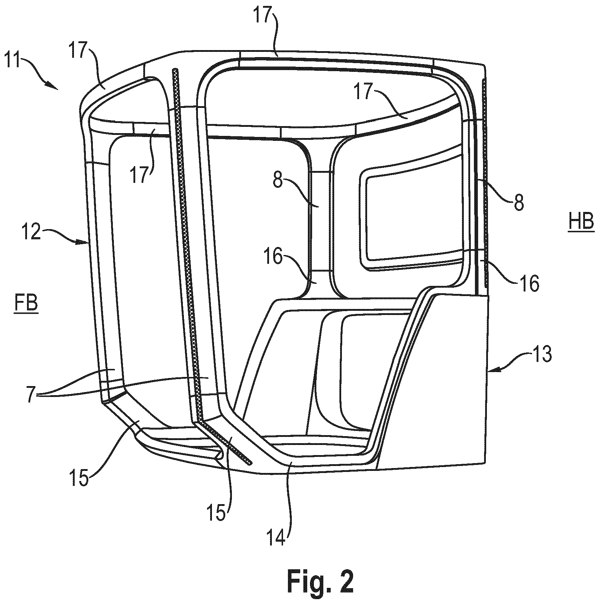

Fig. 2 zeigt schematisch und exemplarisch eine perspektivische Ansicht des Kabinenrahmens 11 der Fahrerkabine 4 für das als Erntemaschine 2 ausgeführtes Arbeitsfahrzeug 1.

Die Fahrerkabine 4 umfasst den Kabinenrahmen 11 mit einer Rahmenstruktur 12. Weiterhin umfasst der Kabinenrahmen 11 ein Sockelelement 13. Das Sockelelement 13 ist Teil des Kabinenbodens 5. Die Rahmenstruktur 12 des Kabinenrahmens 11 ist system-übergreifend ausgebildet, sodass diese bei den unterschiedlichen Ausführungen von Arbeitsfahrzeugen 1 verwendet wird. Das Sockelelement 13 gemäß der in Fig. 2 beispielhaft dargestellten Ausführungsform des Kabinenrahmens 11 unterscheidet sich nur in den für das jeweilige Arbeitsfahrzeug 1 spezifischen Aspekten.

Bei dem als Erntemaschine 2 ausgeführten Arbeitsfahrzeug 1 weist das in Fig. 2 dargestellte Sockelelement 13 im Frontbereich FB eine vom Bodenabschnitt 14 des Sockelelements 13 ausgehend ansteigende Neigung von zwei frontseitigen Säulenabschnitt 15 auf. Die Säulenabschnitte 15 dienen der Anbindung der im Wesentlichen vertikal verlaufenden A-Säulen 7 der Rahmenstruktur 12 an das Sockelelement 13. Die Neigung der Säulenabschnitte 15 ermöglicht es einer in der Fahrerkabine 4 befindlichen Person den Bereich unmittelbar vor und unterhalb der Fahrerkabine 4 einzusehen, was bei dem als Erntemaschine 2 ausgeführten Arbeitsfahrzeug 1 notwendig und sinnvoll ist. Im Heckbereich HB der Fahrerkabine 4 respektive des Kabinenrahmens 11 befinden sich die zwei B-Säulen 8. Die zwei B-Säulen 8 sind durch Säulenabschnitte 16 im Heckbereich HB des Sockelelements 13 angebunden.

Die A-Säulen 7 und die B-Säulen 8 sind an ihren Enden durch in Längsrichtung und in Querrichtung der Fahrerkabine 4 verlaufende Rahmensegmente 17 als Komponenten der Rahmenstruktur 12 miteinander verbunden. Die zwei A-Säulen 7 und die zwei B-Säulen 8 sind im Wesentlichen vertikal verlaufend angeordnet und nehmen das Kabinendach 6 auf, welches die Fahrerkabine 4 nach oben abschließt.

Die freien Bereiche innerhalb der Rahmenstruktur 12 zwischen den beiden A-Säulen 7 und den B-Säulen 8 sowie zwischen den A-Säulen 7 und den B-Säulen 8 des Kabinenrahmens 11 sind durch die Frontscheibe 9 sowie Seitenscheiben vollflächig verschlossen. Die Seitenscheiben weisen keine zusätzlichen Rahmenelemente auf, welche die freie Sicht aus der Fahrerkabine 4 heraus, insbesondere nach vorne und zur Seite, einschränken.

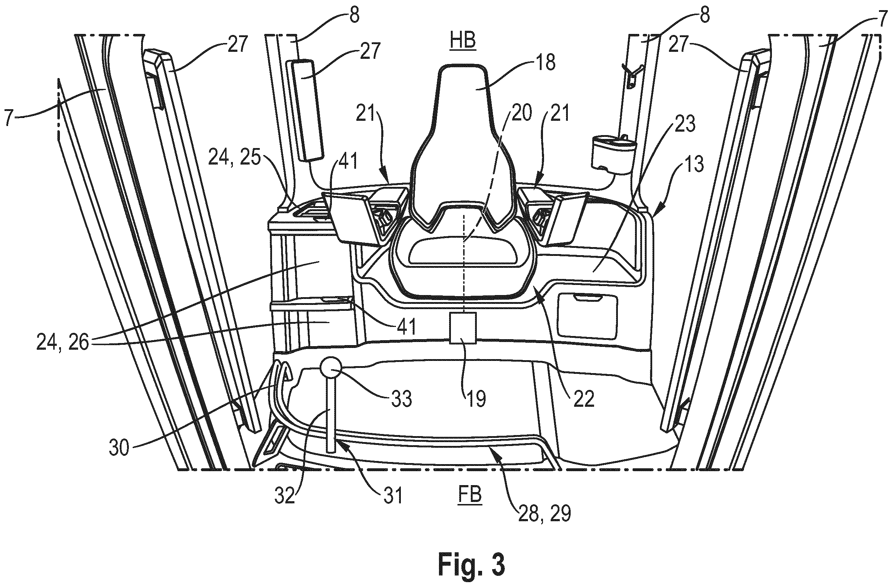

Die Darstellung in Fig. 3 zeigt schematisch und exemplarisch eine perspektivische Teilansicht der Fahrerkabine 4 von vorne. Auf dem Sockelelement 13 ist ein Fahrersitz 18 in einem ausgeformten Bereich 22 des Sockelelements 13 angeordnet. Der Fahrersitz 18 ist um eine vertikale Achse 20 schwenkbar. An dem Fahrersitz 18 sind beidseitig Armlehnen 21 angeordnet. Der Fahrersitz 18 ist so beschaffen, dass der Fahrer nach Art einer Rückenlehne eines PKW gestützt wird. Damit der Fahrer dennoch nach rückwärts schauen kann, ist der Fahrersitz 18 um die vertikale Achse 20 soweit drehbar, dass der Fahrer mit leichter Kopfbewegung nach rechts oder links den rückwärtigen Bereich einsehen kann, insbesondere um Kupplungselemente im rückwärtigen Bereich eines als Traktor ausgeführten Arbeitsfahrzeugs 1 einsehen zu können. Dafür ist weiterhin vorzusehen, dass ein rückwärtiges Fenster zwischen den B-Säulen 8 zu öffnen ist. Der Fahrersitz 18 kann im Bereich einer Nackenstütze belüftet ausgeführt sein. Dies ermöglicht je nach Einsatzzeit das Wärmen oder Kühlen im Kopfbereich mittels eines aus einer Öffnung im Bereich der Nackenstütze austretenden Luftstroms. Der Fahrersitz 18 kann mittels einer Aktuatorik 19, insbesondere eines Elektromotors, um die vertikale Achse 20 schwenkbar sein. Dazu kann die Aktuatorik 19 mittels einer schaltbaren Kupplung zugeschaltet werden.

Die den Fahrersitz 18 schwenkende Aktuatorik 19 ist durch eine Steuerungsvorrichtung ansteuerbar, um den Fahrersitz 18 bei Detektion eines Betretens oder Verlassens der Fahrerkabine 4 automatisch aus einer Straßenfahrposition, in welcher der Fahrersitz 18 mit seiner Sitzflächenvorderkante im Wesentlichen parallel zur Frontscheibe 9 orientiert ist, in eine dem Zugangsbereich 10 der Fahrerkabine 18 zugewandte Position zu verschwenken. Hierdurch kann das Betreten oder Verlassen der Fahrerkabine 18 komfortabler gestaltet werden.

Neben dem Fahrersitz 18 ist auf der dem Zugangsbereich 10 zugewandten Seite des Sockelelements 13 ein Beifahrersitz 23 im Sockelelement 13 ausgebildet. Auf der dem Beifahrersitz 23 gegenüberliegenden Seite befindet sich zumindest eine Verstauvorrichtung 24. Die zumindest eine Verstauvorrichtung 24 ist als Ablagefläche 25 ausgeführt und auf der Oberseite des Sockelelements 13 als Vertiefung ausgebildet. Zumindest eine weitere Verstauvorrichtung 24 ist als verschließbarer Stauraum 26 ausgeführt. Die zumindest eine Verstauvorrichtung 24 ist von einem in einer Sitzposition befindlichen Fahrer vom Fahrersitz 18 aus erreichbar, ohne diesen verlassen zu müssen.

Des Weiteren kann der Stauraum 26 mit einer Benutzererkennungsvorrichtung 41 ausgeführt sein. Bevorzugt kann die Benutzererkennungsvorrichtung 41 als Fingerabdrucksensor ausgeführt sein. Dies ermöglicht eine Personalisierung des Zugangs zum Stauraum 26. Der Fingerabdrucksensor kann in ein Displayelement integriert sein, welches am Stauraum 26 oder an der diesen verschließenden Abdeckung angeordnet ist. Weiterhin können an den A-Säulen 7 und/oder den B-Säulen 8 auf ihren dem Inneren der Fahrerkabine 4 zugewandten Seiten Visualisierungseinrichtungen 27 angeordnet sein. Die Visualisierungseinrichtungen 27 können die jeweilige A-Säule 7 und/oder B-Säule 8 ganz oder teilweise überdecken. Die Visualisierungseinrichtungen 27 umfassen Kameras, welche den von den A-Säulen 7 bzw. B-Säulen 8 verdeckten Sichtbereich außerhalb der Fahrerkabine 4 erfassen und auf die Visualisierungseinrichtungen 27 übertragen. Auf diese Weise wird eine im Wesentlichen unterbrechungsfreie bzw. störungsfreie Sicht aus der Fahrerkabine 4 heraus ermöglicht. Dabei wird das durch die A-Säulen 7 und/oder den B-Säulen 8 verdeckte Sichtfeld durch an der Fahrerkabine 4 angeordnet Kameras aufgenommen und auf den Visualisierungseinrichtungen 27 wiedergegeben. Im in Fig. 3 dargestellten Ausführungsbeispiel sind an den beiden A-Säulen 7 sowie zumindest einer der B-Säulen 8 Visualisierungseinrichtungen 27 angeordnet. Darüber hinaus dienen die Visualisierungseinrichtungen 27 der Anzeige von Informationen zum Arbeitsfahrzeug 1 oder dem daran angeordneten Anbaugerät.

Vor der Frontscheibe 9 ist zumindest eine dem Fahrersitz 18 frontseitig in einem bodennahen Bereich zugeordnete Fußstütze 28 angeordnet. Die Fußstütze 28 ist als zumindest eine im Wesentlichen bogenförmig verlaufende Schiene 29 ausgeführt, die sich abschnittsweise über die Breite der Frontscheibe 9 erstreckt.

Die Fußstütze 28 ist im Wesentlichen L-förmig angeordnet auf dem Kabinenboden 5, wobei sich ein Abschnitt 30 der Schiene 29 abschnittsweise und im Wesentlichen parallel zu einer Längsseite der Fahrerkabine 4 erstreckt.

Weiterhin ist zumindest ein frontseitig vor der Frontscheibe 9 angeordnetes Haltegriffsystem 31 vorgesehen. Das Haltegriffsystem 31 ist als ein im Wesentlichen senkrecht zum Kabinenboden 5 aufragendes stangenförmiges Bauteil 32 mit einem am freien Ende angeordneten Griffelement 33 ausgeführt ist, wobei das Griffelement 33 im Wesentlichen zentrisch auf und/oder orthogonal zum stangenförmigen Bauteil 32 auf diesem angeordnet ist. Denkbar ist, dass das Haltegriffsystem 32 zumindest abschnittsweise in eine gegenüber dem Kabinenboden 5 im Wesentlichen parallele Position, d.h. im Wesentlichen liegende Position, überführbar ist. Alternativ kann das Haltegriffsystem 31 entlang der Fußstütze 28 respektive der zumindest einen Schiene 29 verschiebbar sein. Dadurch ließe sich das Haltegriffsystem 31 in eine Position außerhalb des Sichtbereichs der Frontscheibe 9 bewegen. Dabei kann das Haltegriffsystem 31 auf der zumindest einen Schiene 29 an unterschiedlichen Stellen fixierbar sein. Hierzu kann am bodenseitigen Ende des stangenförmigen Bauteils 32 eine Fixiervorrichtung angeordnet sein, welche eine Verriegelungs- und Entriegelungsmechanismus aufweist. Hierdurch lässt sich das Haltegriffsystem 31 beliebig entlang der Fußstütze 28 positionieren.

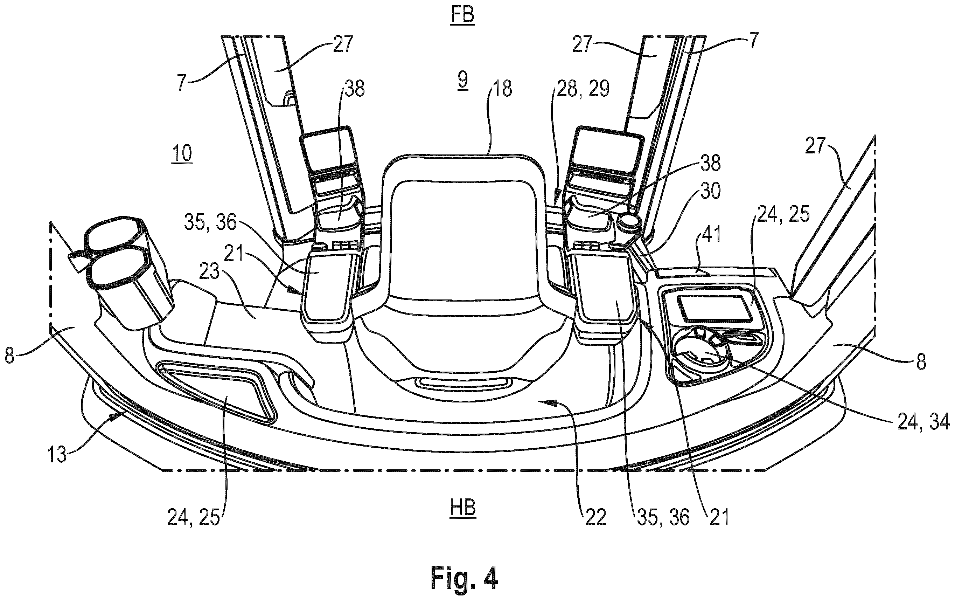

In Fig. 4 ist schematisch und exemplarisch eine perspektivische Teilansicht der Fahrerkabine 4 gemäß Fig. 3 von hinten dargestellt. Die zumindest eine Verstauvorrichtung 24 kann weiterhin als eine Halterung 34 ausgeführt sein. Im dargestellten Ausführungsbeispiel ist die Halterung 34 in die Ablagefläche 25 integriert.

Weiterhin zeigt die Darstellung gemäß Fig. 4 die beiden Armelehnen 21, die beidseitig am Fahrersitz 18 angeordnet sind. Die Armlehnen 21 weisen einen Abschnitt 35 auf, welcher sich ausgehend vom Fahrersitz 18 im Wesentlichen in horizontaler Richtung erstreckt. Der Abschnitt 35 bildet eine Unterarmauflagefläche 36 aus, an die sich ein tieferliegender Abschnitt 37 anschließt, der sich ebenfalls im Wesentlichen in horizontaler Richtung erstreckt. Auf dem tieferliegenden Abschnitt 37 ist jeweils zumindest ein in die Armlehne 21 integriertes Lenkelement 38 angeordnet. Das jeweilige Lenkelement 38 ist bevorzugt als Joystick oder Lenkhebel ausgeführt. Die Lenkelemente 38 sind Teil eines Steer-by-Wire Lenksystems.

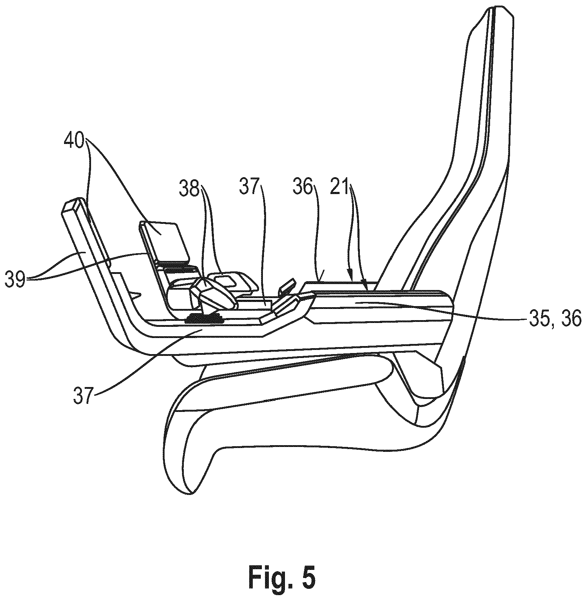

An den tieferliegenden Abschnitt 37 schließt sich ein weiterer Abschnitt 39 der jeweiligen Armelehne 21 an, der, unter einem Winkel geneigt, sich abschnittsweise in vertikaler Richtung erstreckt, wie in Fig. 5 dargestellt. Am freien Ende des Abschnitts 39 der jeweiligen Armelehne 21 kann ein Anzeigeelement 40 angeordnet sein. Zudem können an diesem Abschnitt 39 weitere Bedienelemente angeordnet sein.

Im frontseitigen Bereich der Fahrerkabine 4 ist ein teleskopierbar ausgeführtes Lenkrad 42 angeordnet. Das teleskopierbare Lenkrad 42 ist Teil des Steer-by-Wire Lenksystems des Arbeitsfahrzeugs 1. Das teleskopierbare Lenkrad 42 ist in einer Haltevorrichtung 43 aufgenommen ist, welche entlang der als zumindest eine Schiene 29 ausgeführten Fußstütze 28 verfahrbar ist oder auf dem Kabinenboden 5 angeordnet ist.

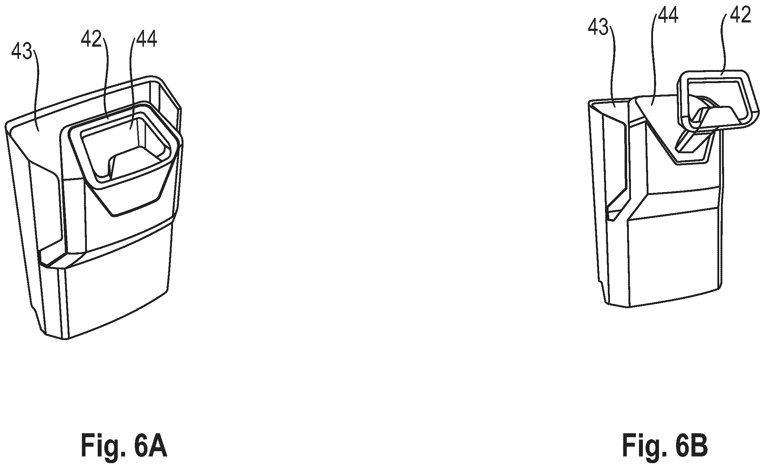

Die Darstellung in Fig. 6A zeigt schematisch und exemplarisch eine perspektivische Ansicht der Haltevorrichtung 43 für das teleskopierbar ausgeführte Lenkrad 42 in einer Verstauposition. In der Verstauposition befindet sich das Lenkrad 42 in einer Aufnahmevertiefung 44 der Haltevorrichtung 43. Dabei schließt das Lenkrad 42 im Wesentlichen bündig mit den die Aufnahmevertiefung 44 randseitig umgebenden Wandabschnitten ab.

In Fig. 6B ist schematisch und exemplarisch eine perspektivische Ansicht des Lenkrades 42 gemäß Fig. 6A in einer Betriebsposition dargestellt. Das teleskopierbare Lenkrad 42 ragt aus der Haltevorrichtung 43 heraus. Das teleskopierbare Lenkrad 42 kann zur Einnahme der Betriebsposition, insbesondere motorisch, ausgefahren werden.

Das teleskopierbare Lenkrad 42 kann insbesondere bei einer Straßenfahrt zum Einsatz kommen. Insbesondere als Erntemaschinen 2 ausgeführte Arbeitsfahrzeuge 1 weisen einen sogenannten Straßenfahrschalter auf. Die Detektion der Betätigung des Straßenfahrschalters kann dazu verwendet werden, das teleskopierbare Lenkrad 42 für die Straßenfahrt automatisch auszufahren bzw. bei einem Wechsel zur Feldfahrt automatisch einzufahren.

Die Fahrerkabine 4 weist ein Lenkerersatzsystem auf, welches das Lenken des Arbeitsfahrzeugs 1 ohne das Lenkrad 42 erlaubt. Das Lenkerersatzsystem des Arbeitsfahrzeugs 1 umfasst die zumindest in die beidseitig am Fahrersitz 18 positionierten Armlehnen 21 integrierten Lenkelemente 38, die zumindest eine dem Fahrersitz 18 frontseitig in einem bodennahen Bereich zugeordnete Fußstütze 28, das zumindest eine frontseitig angeordnete Haltegriffsystem 31 und die zumindest eine von einem in einer Sitzposition befindlichen Fahrer vom Fahrersitz 18 aus erreichbare Verstauvorrichtung 24.

Wesentlich ist dabei, dass das Lenkerersatzsystem einfach zu bedienen ist, wobei dem Fahrer bei der Betätigung der Lenkelemente 38 durch die Fußstütze 28 und das Haltegriffsystem 31 ein sicheres Fahrgefühl vermittelt wird und das Vorfeld des Arbeitsfahrzeugs 1 gut einsehbar ist. Die Möglichkeit für den Fahrer, sich mit seinen Füßen auf der Fußstütze 28 abzustützen, kann dem Unsicherheitsgefühl entgegenwirken, welches sich bei der großen Frontscheibe einstellen kann. Indem sich der Fahrer am Haltegriffsystem 31 abstützen kann, während er sich in Richtung der Frontscheibe 9 vorbeugt, ist das Vorfeld des Arbeitsfahrzeugs 1 gut einsehbar.

### Bezugszeichenliste

| | | | |
|---|---|---|---|
| 1 | Arbeitsfahrzeug | 34 | Halterung |
| 2 | Erntemaschine | 35 | Erster Abschnitt |
| 3 | Vorsatzgerät | 36 | Unterarmauflagefläche |
| 4 | Fahrerkabine | 37 | Tieferliegender Abschnitt |
| 5 | Kabinenboden | 38 | Lenkelement |
| 6 | Kabinendach | 39 | Abschnitt |
| 7 | A-Säule | 40 | Anzeigeelement |
| 8 | B-Säule | 41 | Benutzererkennungsvorrichtung |
| 9 | Frontscheibe | 42 | Lenkrad |
| 10 | Zugangsbereich | 43 | Haltevorrichtung |
| 11 | Kabinenrahmen | 44 | Aufnahmevertiefung |
| 12 | Rahmenstruktur | | |
| 13 | Sockelelement | FB | Frontbereich |
| 14 | Bodenabschnitt | HB | Heckbereich |
| 15 | Säulenabschnitt | | |
| 16 | Säulenabschnitt | | |
| 17 | Rahmensegment | | |
| 18 | Fahrersitz | | |
| 19 | Aktuatorik | | |
| 20 | Vertikale Achse | | |
| 21 | Armlehne | | |
| 22 | Bereich von 13 | | |
| 23 | Beifahrersitz | | |
| 24 | Verstauvorrichtung | | |
| 25 | Ablagefläche | | |
| 26 | Stauraum | | |
| 27 | Visualisierungseinrichtung | | |
| 28 | Fußstütze | | |
| 29 | Schiene | | |
| 30 | Abschnitt von 29 | | |
| 31 | Haltegriffsystem | | |
| 32 | Stangenförmiges Bauteil | | |
| 33 | Griffelement | | |

## Patentansprüche

1. Fahrerkabine (4) für ein landwirtschaftliches Arbeitsfahrzeug (1), wobei die Fahrerkabine (4) einen Fahrersitz (18), an dem beidseitig Armlehnen (21) angeordnet sind, eine die Fahrerkabine (4) frontseitig begrenzende Frontscheibe (9), die sich im Wesentlichen zwischen Kabinenboden (5) und Kabinendach (6) der Fahrerkabine (4) erstreckt, sowie ein Lenkerersatzsystem aufweist, **dadurch gekennzeichnet, dass** das Lenkerersatzsystem
- zumindest in die beidseitig am Fahrersitz (18) positionierten Armlehnen (21) integrierte Lenkelemente (38),
- zumindest eine dem Fahrersitz (18) frontseitig in einem bodennahen Bereich zugeordnete Fußstütze (28),
- zumindest ein frontseitig angeordnetes Haltegriffsystem (31), und
- zumindest eine von einem in einer Sitzposition befindlichen Fahrer vom Fahrersitz (18) aus erreichbare Verstauvorrichtung (24) umfasst.

2. Fahrerkabine (4) nach Anspruch 1, **dadurch gekennzeichnet, dass** die Lenkelemente (38) als Joystick oder Lenkhebel ausgeführt sind.

3. Fahrerkabine (4) nach Anspruch 1 oder 2, **dadurch gekennzeichnet, dass** die jeweilige Armelehne (21) eine Unterarmauflagefläche (36) aufweist, an die sich ein tieferliegender Abschnitt (37) anschließt, auf welchem das jeweilige zumindest eine Lenkelement (38) angeordnet ist.

4. Fahrerkabine (4) nach einem der Ansprüche 1 bis 3, **dadurch gekennzeichnet, dass** die Fußstütze (28) als zumindest eine im Wesentlichen bogenförmig verlaufende Schiene (29) ausgeführt ist, die sich abschnittsweise über die Breite der Frontscheibe (9) erstreckt.

5. Fahrerkabine (4) nach Anspruch 4, **dadurch gekennzeichnet, dass** die Fußstütze (28) im Wesentlichen L-förmig angeordnet ist, wobei sich ein Abschnitt (30) der zumindest einen Schiene (29) abschnittsweise und im Wesentlichen parallel zu einer Längsseite der Fahrerkabine (4) erstreckt.

6. Fahrerkabine (4) nach einem der vorangehenden Ansprüche, **dadurch gekennzeichnet, dass** das Haltegriffsystem (31) als ein im Wesentlichen senkrecht zum Kabinenboden (5) aufragendes stangenförmiges Bauteil (32) mit einem am freien Ende angeordneten Griffelement (33) ausgeführt ist, wobei das Griffelement (33) im Wesentlichen zentrisch auf und/oder orthogonal zum Bauteil (32) auf diesem angeordnet ist.

7. Fahrerkabine (4) nach Anspruch 6, **dadurch gekennzeichnet, dass** das Haltegriffsystem (31) zumindest abschnittsweise in eine gegenüber dem Kabinenboden (5) im Wesentlichen parallele Position überführbar ist.

8. Fahrerkabine (4) nach Anspruch 6 oder 7, **dadurch gekennzeichnet, dass** das Haltegriffsystem (31) entlang der Fußstütze (28) verschiebbar ist.

9. Fahrerkabine (4) nach einem der vorangehenden Ansprüche, **dadurch gekennzeichnet, dass** die zumindest eine Verstauvorrichtung (24) als ein Ablagefach (25) und/oder eine Halterung (34) und/oder ein verschließbarer Stauraum (26) ausgeführt ist.

10. Fahrerkabine (4) nach Anspruch 9, **dadurch gekennzeichnet, dass** der Stauraum (26) eine, insbesondere um eine Schwenkachse schwenkbare, Abdeckung aufweist, welche durch einen Verschlussmechanismus entriegelbar und verschließbar ist.

11. Fahrerkabine (4) nach Anspruch 9 oder 10, **dadurch gekennzeichnet, dass** der Stauraum (26) mit einer Benutzererkennungsvorrichtung (41) ausgeführt ist, die dazu eingerichtet ist, den Verschlussmechanismus zu entriegeln.

12. Fahrerkabine (4) nach einem der vorangehenden Ansprüche, **dadurch gekennzeichnet, dass** im frontseitigen Bereich der Fahrerkabine (4) ein teleskopierbar ausgeführtes Lenkrad (42) angeordnet ist.

13. Fahrerkabine (4) nach Anspruch 12, **dadurch gekennzeichnet, dass** das teleskopierbare Lenkrad (42) in einer Haltevorrichtung (43) aufgenommen ist, welche entlang der Fußstütze (28) verfahrbar ist oder auf dem Kabinenboden (5) angeordnet ist.

14. Fahrerkabine (4) nach Anspruch 12, **dadurch gekennzeichnet, dass** der Fahrersitz (18) um eine vertikale Achse (20) schwenkbar ist, wobei eine den Fahrersitz (18) drehende Aktuatorik (19) vorgesehen ist, welche von einer Steuerungsvorrichtung ansteuerbar ist, um den Fahrersitz (18) bei Detektion eines Betretens oder Verlassens der Fahrerkabine (4) automatisch aus einer Straßenfahrposition, in welcher der Fahrersitz (18) mit seiner Sitzflächenvorderkante im Wesentlichen parallel zur Frontscheibe (9) orientiert ist, in eine einem Zugangsbereich (10) der Fahrerkabine (4) zugewandte Position zu verschwenken.

15. Landwirtschaftliches Arbeitsfahrzeug (1) mit einer Fahrerkabine (4), **dadurch gekennzeichnet, dass** die Fahrerkabine (4) nach einem der Ansprüche 1 bis 14 ausgeführt ist.
